# EUROPEAN PATENT APPLICATION

(11) **EP 4 707 985 A1**
(43) Date of publication of application: **11.03.2026**
(21) Application number: 24813864.6
(22) Date of filing: 28.03.2024
(51) Int. Cl.: G05D 1/686, G05D 1/43, G01S 13/86, G01C 21/20

(54) **ROBOT, FOLLOWING METHOD AND APPARATUS FOR ROBOT, AND STORAGE MEDIUM**

(30) Priority: 31.05.2023 CN 202310637930
(71) Applicant: Shenzhen Pudu Technology Co., Ltd., Shenzhen, Guangdong 518000 (CN)
(72) Inventor: WU, Minghao, Shenzhen, Guangdong 518000 (CN)
(74) Representative: Corradini, Cesare
(86) International application number: PCT/CN2024/084455
(87) International publication number: WO 2024/244658

(57) **Abstract**

The present disclosure relates to a robot, a method and an apparatus for a robot, and a storage medium. The method includes: determining object information of multiple objects based on a first target image, a first depth map, and first radar information (202); matching the object information and historical object information to obtain a matching result, and the historical object information is information corresponding to a historically locked target object (204); locking the target object again in a case where the matching result indicates that the multiple objects do not include the target object (206); adding the object information of the target object to a target queue to obtain a motion trajectory of the target object in a case where the matching result indicates that the multiple objects include the target object (208); planning a motion path for the robot according to a current state of the robot and the motion trajectory (210); and sampling the motion path, determining a motion speed of the robot at each of the trajectory points based on distances between the trajectory points obtained by sampling, and following the target object according to the motion speed (212).

## Description

### CROSS-REFERENCE TO RELATED APPLICATIONS

This application claims priority to Chinese patent application No. 2023106379307, filed on May 31, 2023, entitled "Robot, Following Method and Apparatus for Robot, and Storage Medium", and the content of which is hereby incorporated herein by reference in its entirety.

### TECHNICAL FIELD

The present disclosure relates to the field of robot technology, and in particular, to a robot, a following method and an apparatus for robot, and a storage medium.

### BACKGROUND

With the continuous development of robot technology, robots have been widely used in various application scenarios, such as food delivery and home service. In some practical applications, robots are required to follow a target for movement. In conventional robot following solutions, automatic following is mainly based on vision. For example, a camera on the robot is used to collect image information of a target object, and then the image information is analyzed to obtain the motion trajectory of the target object, so as to predict the motion path for the robot and then perform following.

However, in conventional robot following solutions, the followed target object is easily lost, making it impossible to continue executing the following task.

### SUMMARY

A robot, a following method and apparatus for robot, and a storage medium are provided in the various embodiments of the present disclosure.

A robot, including a memory and a processor, the memory storing a computer program, and the processor executing the computer program to execute the following steps:
determining object information of multiple objects based on a first target image, a first depth map, and first radar information; matching the object information and historical object information to obtain a matching result, where the historical object information is information corresponding to a historically locked target object; locking the target object again in a case where the matching result indicates that the multiple objects do not include the target object;
adding the object information of the target object to a target queue to obtain a motion trajectory of the target object in a case where the matching result indicates that the multiple objects include the target object; planning a motion path for the robot according to a current state of the robot and the motion trajectory; and sampling the motion path, determining a motion speed of the robot at each of the trajectory points based on distances between the trajectory points obtained by sampling, and following the target object according to the motion speed.

A following method for a robot, including:
determining object information of multiple objects based on a first target image, a first depth map, and first radar information; matching the object information and historical object information to obtain a matching result, where the historical object information is information corresponding to a historically locked target object; locking the target object again in a case where the matching result indicates that the multiple objects do not include the target object; adding the object information of the target object to a target queue to obtain a motion trajectory of the target object in a case where the matching result indicates that the multiple objects include the target object; planning a motion path for the robot according to a current state of the robot and the motion trajectory; and sampling the motion path, determining a motion speed of the robot at each of the trajectory points based on distances between the trajectory points obtained by sampling, and following the target object according to the motion speed.

A following apparatus for a robot, including:
a first determination module, configured to determine object information of multiple objects based on a first target image, a first depth map, and first radar information;
a matching module, configured to match the object information and historical object information to obtain a matching result, where the historical object information is information corresponding to a historically locked target object;
a locking module, configured to lock the target object again in a case where the matching result indicates that the multiple objects do not include the target object;
an adding module, configured to add the object information of the target object to a target queue to obtain a motion trajectory of the target object in a case where the matching result indicates that the multiple objects include the target object;
a planning module, configured to plan a motion path for the robot according to a current state of the robot and the motion trajectory; and
a following module, configured to sample the motion path, determine a motion speed of the robot at each of the trajectory points based on distances between the trajectory points obtained by sampling, and follow the target object according to the motion speed.

A computer-readable storage medium, storing a computer program thereon. The computer program, when executed by a processor, implements the steps of the following method for a robot.

A computer program product, including a computer program. The computer program, when executed by a processor, implements the steps of the following method for a robot.

The details of one or more embodiments of the present disclosure are described in the accompanying drawings and description below. Other features and merits of the technical solution of the present disclosure will be apparent from the specification, accompanying drawings, and claims.

### BRIEF DESCRIPTION OF THE DRAWINGS

To more clearly illustrate the technical solutions in the embodiments of the present disclosure or in the related art, the accompanying drawings required for describing the embodiments or the related art will be briefly introduced below. Obviously, the drawings in the following description only illustrate some embodiments of the present disclosure. For those skilled in the art, other drawings of the embodiments can also be obtained according to these drawings without inventive efforts.
FIG. 1 is an application environment diagram of a following method for a robot in an embodiment.
FIG. 2 is a schematic flowchart of a following method for a robot in an embodiment.
FIG. 3 is a schematic diagram of a motion trajectory to a target object in an embodiment.
FIG. 4 is a schematic diagram of a following trajectory of a robot in an embodiment.
FIG. 5 is a schematic flowchart of a following method for a robot in another embodiment.
FIG. 6 is a schematic flowchart of data fusion and target following in an embodiment.
FIG. 7 is a structural block diagram of a following apparatus for a robot in an embodiment.
FIG. 8 is a structural block diagram of a following apparatus for a robot in another embodiment.
FIG. 9 is an internal structural diagram of a robot in an embodiment.

### DETAILED DESCRIPTION

For better understanding of the present disclosure, the present disclosure will be described more comprehensively below with reference to the relevant accompanying drawings. Preferred embodiments of the present disclosure are shown in the drawings. However, the technical solution of the present disclosure can be implemented in many different forms and is not limited to the embodiments described herein. On the contrary, the purpose of providing these embodiments is to make the understanding of the disclosed content of the present disclosure more thorough and comprehensive.

Unless otherwise defined, all technical and scientific terms used herein have the same meaning as commonly understood by those skilled in the art to which the invention pertains. The terms used in the specification of the present disclosure are only for the purpose of describing specific embodiments and are not intended to limit the present disclosure. The term "and/or" as used herein includes any and all combinations of one or more of the associated listed items.

It should be noted that, in the following description, the terms "first", "second", and "third" are only used to distinguish similar objects and do not represent a specific ordering of the objects. It can be understood that "first", "second", and "third" can be interchanged in specific order or sequence when permitted, so that the embodiments of the present disclosure can be implemented in an order other than that shown or described.

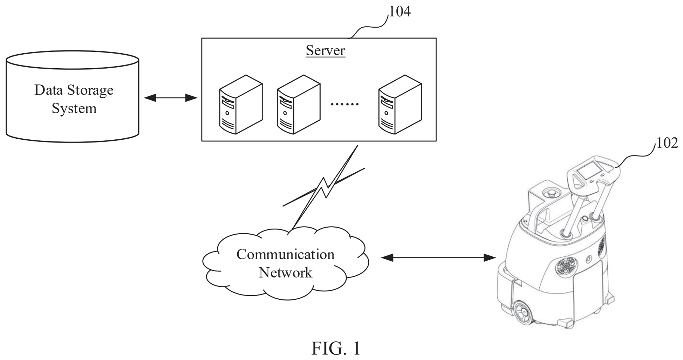

The following method for a robot provided in each embodiment of the present disclosure can be applied to the application environment, as shown in FIG. 1. A robot 102 communicates with a server 104 through a network. A data storage system can store data that the server 104 needs to process. The data storage system can be integrated on the server 104, or placed on cloud or other network servers. The server 104 can maintain new function plug-ins or programs for the robot 102, as well as various versions of the system. When there is a latest version of the system, this version of the system can be distributed to the robot 102 for system update.

The robot 102 includes, but is not limited to, a food delivery robot, a reception robot, a cleaning robot, or other types of robots. The cleaning robot may be a floor-sweeping robot, a robot integrating sweeping and mopping, or other types of robots with cleaning functions.

The server 104 can be an independent physical server or a service node in a blockchain system. Each service node in the blockchain system forms a Peer To Peer (P2P) network, and the P2P protocol is an application layer protocol running on top of the Transmission Control Protocol (TCP). In addition, the server 104 can also be a server cluster including multiple physical servers, and can be a cloud server providing basic cloud computing services such as cloud services, cloud databases, cloud computing, cloud functions, cloud storage, network services, cloud communications, middleware services, domain name services, security services, Content Delivery Network (CDN), or big data and artificial intelligence platforms.

The robot 102 and the server 104 can be connected through a communication connection such as Bluetooth, Universal Serial Bus (USB), or network, which is not limited herein.

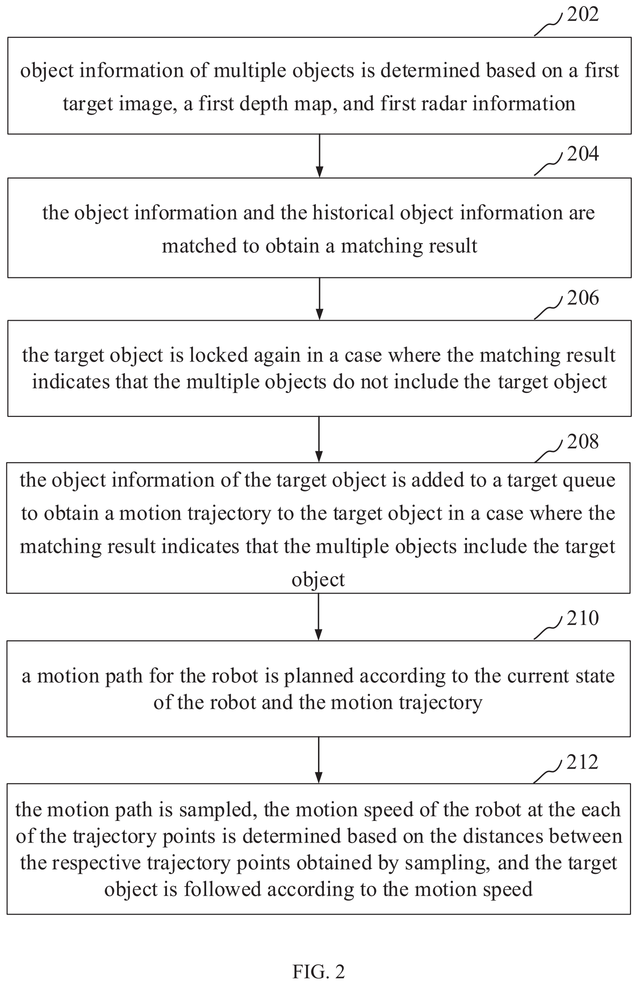

In an embodiment, as shown in FIG. 2, a following method for a robot is provided. Taking the method applied to the robot in FIG. 1 as an example, the following method for a robot includes the following steps.

Step S202, object information of multiple objects is determined based on a first target image, a first depth map, and first radar information.

The first target image can be an image collected by a conventional camera during the movement of the robot, such as a Red Green Blue (RGB) image. The first depth map can be an image containing depth information collected by a depth camera during the movement of the robot, such as an RGB-D image. The first radar information can be radar information collected by a lidar during the movement of the robot.

The object refers to a person object within the visual range of the robot, such as a pedestrian. The object information can be attribute information of the object, such as a feature value and pose information of the object (i.e., the position and posture of the object).

In an embodiment, the robot first receives a voice instruction from a user through a microphone array, then recognizes the voice instruction, and when the recognition is successful, completes the wake-up of a following task of the robot. The microphone array will return sound source angle information to the robot, and then the robot perform the following task.

In an embodiment, the robot can also recognize following gestures made by the user through an image recognition sensor, such as a camera, then perform matching and recognition on the gesture command, and when the recognition is successful, complete the wake-up of the following task of the robot. The camera will return the user's position information, and then the robot performs the following task.

In an embodiment, the user can also input a following task control instruction through a touch screen of the robot, a physical button, a remote controller, or an APP on a terminal to start the wake-up of the following task of the robot.

Specifically, the step S202 includes:
the robot obtaining a first target image, a first depth map, and first radar information, which are collected during movement;
   performing object detection on each of objects in the first target image to obtain first initial object information;
performing obstacle detection on the first depth map and the first radar information to obtain first obstacle coordinates corresponding to the first depth map and the first radar information, respectively;
performing data fusion on the first initial object information and each of the first obstacle coordinates to obtain first fused data, and determining object information of each of the objects based on the first fused data.

The first obstacle coordinates are the coordinates of each obstacle within the visual range of the robot. The target object refers to the target to be followed by the robot, that is, the user or operator who issues a following task control instruction (voice instruction, gesture instruction, remote control instruction, etc.) to the robot.

In an embodiment, before performing the data fusion, the robot can first perform coordinate conversion on the object coordinates of each of the objects in the first initial object information to obtain a first world coordinate of each of the objects in the robot navigation system, and perform coordinate conversion on the first obstacle coordinates corresponding to the first depth map and the first radar information respectively to obtain a second world coordinate and a third world coordinate of each of the obstacles in the robot navigation system. Then, the robot fuses the feature values in the first initial object information, the first world coordinate, the second world coordinate, and the third world coordinate.

For example, the robot uses a deep learning method to collect an RGB image through an RGB camera, extracts all pedestrians in the RGB image, and then converts the coordinates corresponding to these pedestrians into world coordinates in the robot navigation system to obtain pedestrian coordinates and corresponding feature values within the visual range in the robot navigation system. An RGB-D depth camera is used to collect a depth map, and coordinates of obstacles within the visual range are obtained according to the depth map, which are then converted into world coordinates in the robot navigation system. A single-line lidar is used to obtain the coordinates of the obstacles within the visual range, which are converted into obstacle coordinates in the robot navigation system. Then, data fusion is performed on the world coordinates of pedestrians within the visual range, corresponding feature values, and the world coordinates of each of the obstacles within the visual range, so as to obtain object information of the multiple pedestrians within the visual range in the world coordinate system. Sequentially, the step S204 is executed, such as matching the object information with a previously locked target object to find the previously locked target object. After finding the locked target object, the object information of the target object is updated and added to a Kalman filter.

In the target locking phase, the robot obtains the sound source angle when each of the objects emits a voice, as well as a second target image, a second depth map and second radar information collected during movement; performs object detection on each of the objects in the second target image to obtain second initial object information; performs coordinate conversion on the object coordinates of each of the objects in the second initial object information to obtain a fourth world coordinate of each of the objects in the robot navigation system; performs obstacle detection on the second depth map and the second radar information to obtain second obstacle coordinates corresponding to the second depth map and the second radar information, respectively; performs coordinate conversion on the second obstacle coordinates corresponding to the second depth map and the second radar information, respectively, to obtain a fifth world coordinate and a sixth world coordinates of each of the obstacles in the robot navigation system; converts the sound source angle into a sound source direction vector in the robot navigation system, and determines a seventh world coordinate of each of the objects in the robot navigation system according to the sound source direction vector; fuses the feature values in the second initial object information, the fourth world coordinates, the fifth world coordinates, the sixth world coordinates and the seventh world coordinates to obtain second fused data; locks the target object based on the second fused data to obtain historical object information of the target object. The historical object information includes a feature value and pose information of the target object. The pose information includes a world coordinate and a posture in the robot navigation system.

The second target image, the second depth map, and the second radar information are collected before collecting the first target image, the first depth map, and the first radar information, respectively. Similarly, the second target image may be an image collected by a conventional camera during the movement of the robot, such as an RGB image. The second depth map may be an image with depth information collected by a depth camera during the movement of the robot, such as an RGB-D image. The second radar information may be radar information collected by a lidar during the movement of the robot.

The second obstacle coordinates are the coordinates of the respective obstacles within the visual range of the robot.

For example, the robot obtains the sound source angle in the microphone coordinate system returned by the microphone array, and then converts the sound source angle into a sound source direction vector in the robot navigation system. The robot uses the deep learning method to collect the RGB image through the RGB camera, then extracts all pedestrians in the RGB image to obtain the pedestrian information and their feature values. According to the intrinsic and extrinsic parameters of the RGB camera, with the help of the distance from the camera to the ground and the imaging epipolar line, a right triangle is constructed, to obtain the coordinates of pedestrians within the visual range in the RGB camera coordinates, and the coordinates of the pedestrians are then converted into the world coordinates of the pedestrians in the robot navigation system. The RGB-D depth camera is used to obtain the coordinates of the obstacles observed within the visual range, which are converted into the world coordinates of the obstacles in the robot navigation system. The single-line lidar is used to obtain coordinates of obstacles observed within the visual range, which are then converted into obstacle coordinates in the robot navigation system. According to the various information obtained by the above four sensors, the fusion is performed on the sound source direction vector, the pedestrian information detected by the RGB camera, the world coordinates of the obstacles detected by the RGB-D camera, and the world coordinates of the obstacles detected by the single-line lidar, and finally the target object to be followed is locked to obtain the coordinates and feature values of the target object in the world coordinate system. If the locking fails, the robot waits for the user's instruction again through voice prompt to activate the following task of the robot.

Step S204, the object information and the historical object information are matched to obtain a matching result.

The historical object information is information corresponding to a historically locked target object.

Specifically, the robot calculates the similarity between the object information and the historical object information, and determines the matching result between the object information and the historical object information according to the similarity.

Step S206, the target object is locked again in a case where the matching result indicates that the multiple objects do not include the target object.

The matching result indicating that the multiple objects do not include the target object means that the target following fails.

Specifically, if the matching result indicates that the multiple objects do not include the target object, the robot sends out a prompt information. The prompt information is used to prompt the user to issue the following task control instruction again, and the robot locks the target object again based on the control instruction.

Step S208, the object information of the target object is added to a target queue to obtain a motion trajectory of the target object in a case where the matching result indicates that the multiple objects include the target object.

Specifically, if each matching result indicates that the multiple objects include the target object, the world coordinate in the object information of the target object obtained each time are added to the target queue, and the motion trajectory of the target object can be obtained according to the world coordinates in the target queue.

Step S210, a motion path for the robot is planned according to a current state of the robot and the motion trajectory.

The motion path refers to a guide route for the robot to move at the next moment. The current state includes the motion direction, current position, linear velocity, angular velocity, linear acceleration, and angular acceleration of the robot, or a motion state calculated according to the motion direction, current position, linear velocity, angular velocity, linear acceleration, and angular acceleration of the robot.

In an embodiment, the robot can determine the current state in the following way. If the matching result indicates that the multiple objects include the target object, the robot inputs the object information of the target object into a target filter, so that the target filter performs position prediction based on the object information to obtain a predicted position of the target object at the next moment. The robot determines a motion direction based on the predicted position and the current position of the target object. The current position is the first world coordinate of the target object in the robot navigation system. The robot determines the current state of the robot according to the motion direction, speed information, and the current position. The target filter may be, but is not limited to, a Kalman filter.

Step S212, the motion path is sampled, a motion speed of the robot at the each of the trajectory points is determined based on distances between the respective trajectory points obtained by sampling, and the target object is followed according to the motion speed.

For planning the motion path for the robot, the specific steps include: the robot sampling the motion trajectory, and fitting the sampled trajectory points to obtain a following trajectory; and planning the motion path for the robot according to the current state of the robot and the following trajectory.

Planning the motion path for the robot is divided into two parts. In the first part, a historical motion trajectory of the target object is sampled to obtain a following trajectory. In the second part, the motion path for the robot is obtained according to the current state of the robot and the following trajectory.

For the sampling on the motion trajectory, the specific steps include: the robot sampling the motion trajectory according to a first sampling frequency to obtain at least two initial sampling points; and when the distance between adjacent initial sampling points among the at least two initial sampling points is greater than a first preset distance, adding the adjacent initial sampling points to a sampling queue.

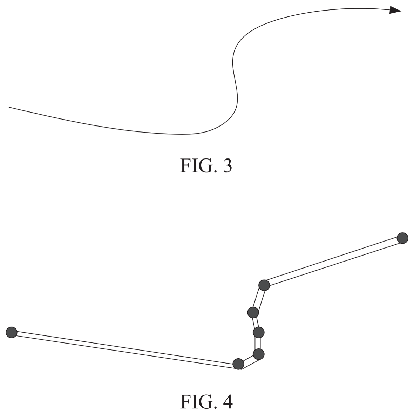

In addition, when the distance between the adjacent initial sampling points among the at least two initial sampling points is less than or equal to the first preset distance, a first motion sub-trajectory is sampled according to a second sampling frequency to obtain first sampling points. The second sampling frequency is greater than the first sampling frequency. The first motion sub-trajectory is the motion trajectory between the adjacent initial sampling points. When the distances between a first sampling point and the at least two initial sampling points are greater than a second preset distance, the at least two initial sampling points and the first sampling point are added to the sampling queue. When the distances between the first sampling point and the at least two initial sampling points are less than or equal to the second preset distance, the adjacent initial sampling points are added to the sampling queue, and a second motion sub-trajectory is sampled according to a third sampling frequency to obtain second sampling points. When the distances between a second sampling point and the first sampling point as well as the first initial sampling point are greater than a third preset distance, the second sampling point is added to the sampling queue. The third sampling frequency is greater than the second sampling frequency. The second motion sub-trajectory is the motion trajectory between the first sampling points and the first initial sampling points among the adjacent initial sampling points, as shown in FIG. 3.

For example, the resolution is set to K m/s and the maximum sampling frequency is set to J times/s. The motion trajectory within each second in the motion trajectory of the followed target is selected. Then the sampling frequency is set to 1 time/s. The corresponding sampling results are Ta and Tb. The points sampled at the two sampling times (i.e., sampling points) are A and B. Assuming that the Euclidean distance between the points A and B is greater than K meters, Ta and Tb are added to the sampling queue. Otherwise, the sampling frequency is doubled, the sampling frequency is currently 2 times/s, and the sampling results are Ta, Tc, Tb. The sampling points at the three times are A, C, and B. The Euclidean distances of AC and CB are calculated, respectively. If the Euclidean distances are greater than K/2, the three sampling points A, C, and B are added to the sampling queue. Otherwise, the sampling frequency is doubled. Assuming that the Euclidean distance of AC is greater than K/2, and the Euclidean distance of CB is less than K/2, Ta and Tc are added to the sampling queue, and Ta and Tc added to the sampling queue are not sampled. For Tc and Tb, the sampling frequency is doubled to 4 times/s, and Tc and Tb are sampled. The sampling results are Tc, Td, Tb, and the sampling points at the three times are C, D, and B. The Euclidean distances of CD and DB are calculated, respectively, and comparing with K/4. The above operations are repeated until the sampling frequency reaches the maximum sampling frequency, then the above sampling is stopped.

Then, the sampling points in the sampling queue are fitted into a straight line using the least squares method. If the fitted straight line is opposite to the final direction and the length of the straight line is short, the straight line is discarded, the sampling points are added to the next period for fitting, and finally the following trajectory generated after sampling is obtained, as shown in FIG. 4, where the black dots on the line are sampling points.

In the above embodiment, object information of multiple objects is determined based on the first target image, the first depth map, and the first radar information; the object information and the historical object information of the historically locked target object are matched to obtain the matching result. The target following using multiple sensors can effectively reduce the probability of losing the followed target due to occlusion in a certain direction. In addition, if the matching result indicates that the multiple objects do not include the target object, the target object is locked again, so that even when the followed target is lost, the following task can be automatically resumed, avoiding the problem that the following task cannot be continued due to occlusion. Moreover, if the matching result indicates that the multiple objects include the target object, the object information of the target object is added to the target queue to obtain the motion trajectory of the target object. The motion path for the robot is planned according to the current state of the robot and the motion trajectory. The motion path is sampled, the motion speeds of the robot at the respective trajectory points are determined based on the distances between the respective trajectory points obtained by sampling, and the robot follows the target object according to the motion speeds, so that the target object can be followed accurately and effectively to perform the following task.

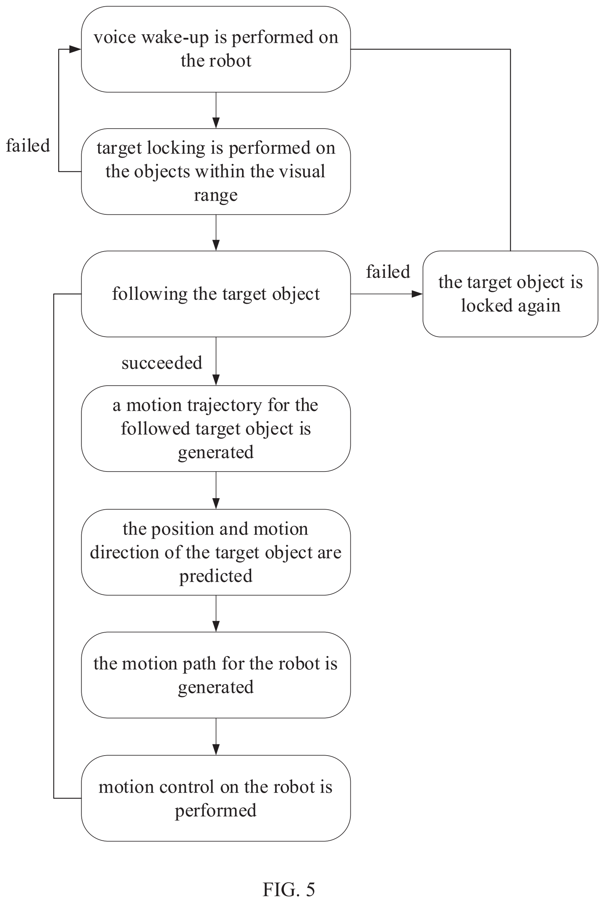

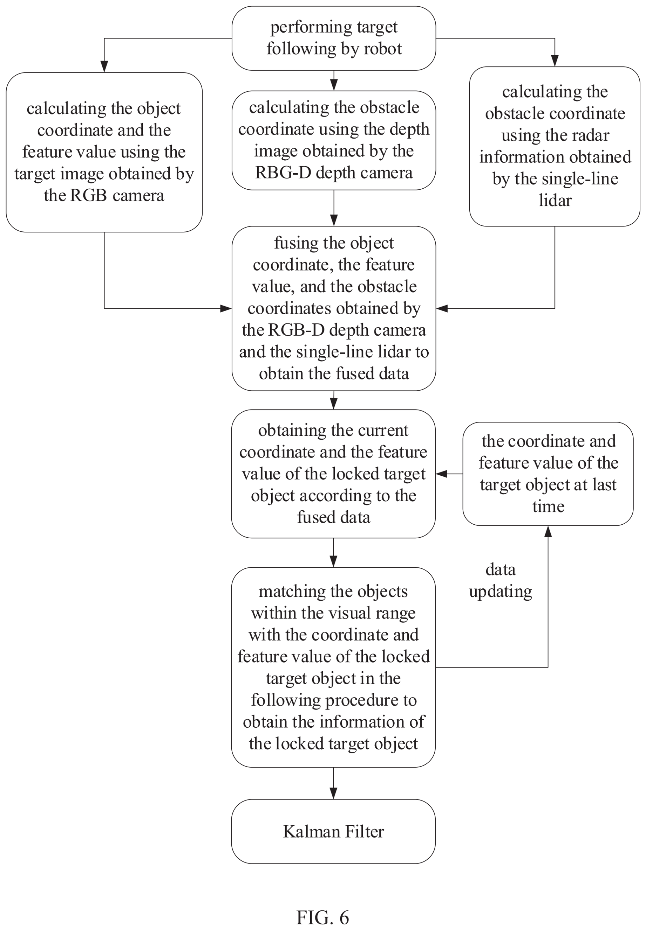

To more clearly illustrate the technical solution of the present disclosure, in a specific embodiment, it is described in combination with FIG. 5 and FIG. 6 as follows.
(1) A voice wake-up is performed on the robot.

A voice instruction is recognized according to the microphone array. When the recognition is successful, the microphone array returns the sound source angle, and the robot is woken up and performs the following task.

(2) Target locking is performed on the objects within the visual range.

According to the sound source angle (coordinates in the microphone coordinate system) returned by the microphone array, it is converted into world coordinates in the robot navigation system to obtain the direction vector of the sound source in the world coordinate system.

Using the deep learning method, the objects within the visual range are detected by the RGB camera to obtain object information and the feature values thereof. According to the intrinsic and extrinsic parameters of the RGB camera, with the help of the distance from the camera to the ground and the imaging epipolar line, a right triangle is constructed to obtain the coordinates of objects within the visual range in RGB camera coordinate, and the coordinates are then converted into world coordinates in the robot navigation system to obtain object coordinates within the visual range in the world coordinate system.

The RGB-D depth camera is used to obtain the coordinates of the obstacles observed within the visual range, which are converted into world coordinates in the robot navigation system to obtain obstacle coordinates within the visual range in the world coordinate system. Similarly, the single-line lidar is used to obtain the coordinates of the obstacles observed within the visual range, which are converted into world coordinates in the robot navigation system to obtain the obstacle coordinates within the visual range in the world coordinate system.

The above four kinds of processed information are fused, that is, the sound source direction vector, the object coordinates detected by the RGB camera, the obstacle coordinates detected by the RGB-D camera, and the obstacle coordinates detected by the single-line lidar are fused to obtain the fused data. The coordinate and feature value of the target object in the world coordinate system are obtained according to the fused data.

If the locking fails, return to step (1) above, and wait for wake-up again through the voice prompt from the robot.

(3) The target object is followed.

As shown in FIG. 6, the specific process of the target following performed on the target object is as follows:
using the deep learning method, all objects in the RGB image collected by the RGB camera are extracted and converted into world coordinates in the robot navigation system to obtain object coordinates and corresponding feature values within the visual range in the world coordinate system;
the RGB-D depth camera is used to obtain obstacle coordinates within the visual range in the world coordinate system;
the single-line lidar is used to obtain obstacle coordinates within the visual range in the world coordinate system.

The above three kinds of data information are fused, and target information of the multiple objects within the visual range in the world coordinate system can be obtained. Then, matching is performed on the target information with the target object locked in step (2). The locked target object is found according to the corresponding feature value and pose information, and the information of the followed target object (i.e., target information) is updated and added to the Kalman filter.

(4) A motion trajectory for the followed target object is generated.

All target information obtained by the target following in step (3) is added to a queue to obtain the motion trajectory of the target object.

(5) The position and motion direction of the target object are predicted.

Using the Kalman filter in step (3), a possible position of the target object at the next moment is obtained, and then a motion direction vector at the next moment is obtained through the predicted position and the current position.

(6) The motion path for the robot is generated.

The motion path for the robot is divided into two parts.

In the first part, a sampling is performed according to the motion trajectory of the target object to obtain the following trajectory. That is, the motion trajectory of the target object is sampled according to the sampling time. The principle is that the greater the distance moved within the sampling time, the faster the sampling speed and the smaller the sampling frequency. On the contrary, the larger the sampling frequency. Further sampling is performed for intervals having small length using dichotomy.
the resolution is set to K m/s. The maximum sampling frequency is set to J times/s. The historical information within one second is selected. The sampling frequency is set to 1 time/s. The sampling results are Ta and Tb. The sampling points at the two sampling times are A and B. If the Euclidean distance of AB is greater than K meters, Ta and Tb are added to the sampling queue. Otherwise, the sampling frequency is doubled, the sampling frequency is set to 2 times/second. The sampling results are Ta, Tc, and Tb. The sampling points are A, C, and B at the three times. The Euclidean distances of AC and CB are calculated. If the Euclidean distance is greater than K/2, add them to the sampling queue. Otherwise, the sampling frequency is doubled. If the Euclidean distance of AC is greater than K/2, and the Euclidean distance of CB is less than K/2, Ta and Tc are added to the sampling queue, the sampling frequency is doubled to 4 times/second, the Ta and Tc added to the sampling queue are not sampled, and Tc and Tb are sampled. The sampling results are Tc, Td, and Tb. The sampling points at the three times are C, D, and B. The Euclidean distances of CD and DB are calculated, compared with K/4. The above operations are repeated until the sampling frequency reaches the maximum sampling frequency.

Using the least squares method, the sampling points in the sampling queue are fitted into a straight line. If the fitted straight line is opposite to the final direction and the length of the straight line is short, the straight line is discarded, and the sampling points are added to the next period for fitting. Finally, the following trajectory generated after sampling is obtained.

In the second part, the motion path for the robot is obtained according to the current state of the robot and the following trajectory. An implementation is as follows. According to the current linear velocity, angular velocity, linear acceleration, and angular acceleration of the robot, all paths for robot movement within 1 second are calculated by sampling, and the motion trajectory closest to the following trajectory is calculated through an obstacle constraint and a following trajectory constraint.

(7) motion control on the robot is performed.

The above trajectory is sampled into N trajectory points according to time t, and the linear velocities and angular velocities are calculated based on the distances between the trajectory points, which are used as the instantaneous issued speed. The distance to the target object is continuously calculated. If the distance between the followed target object and the robot is too close. A zero speed is issued to avoid colliding with the followed target object.

(8) the target object is locked again.

When the target is lost or a target switch occurs, the robot sends out a prompt. The user resets the state of the robot through a voice instruction and performs the target locking again, thereby improving fault tolerance.

The technical solution of the present disclosure has the following technical effects.
1) Using a voice signal to wake-up as a trigger and reset mechanism for the following task can improve the practicality and fault tolerance of the technical solution. In some unavoidable scenarios, such as the sudden appearance of an obstacle between the followed target, which leads to the loss of the followed target, it can be a natural recovery.
2) Compared with the technical solution of common single-target following, the technical solution of multi-target following has a relatively low probability of following a wrong target due to false detection.
3) The technical solution for realizing automatic following control on the robot according to the fusion results, based on fusion of data collected by multiple sensors, has higher accuracy.
4) By optimizing the sampling processing method for sampling the motion trajectory, the motion trajectory to the followed target can be restored to a large extent.

It should be understood that although the respective steps in the flowcharts involved in the above embodiments are shown in sequence according to the arrows, these steps are not necessarily executed in sequence according to the order indicated by the arrows. Unless explicitly stated herein, the execution of these steps is not strictly limited in order, and these steps can be executed in other orders. Moreover, at least part of the steps in the flowcharts involved in the above embodiments may include multiple steps or multiple stages. These steps or stages are not necessarily executed at the same time, but can be executed at different times. The execution order of these steps or stages is not necessarily sequential, but can be alternated or executed alternately with at least part of the steps or stages in other steps or stages.

Based on the same inventive concept, a following apparatus for a robot is also provided in an embodiment of the present disclosure for implementing the following method for a robot involved above. The implementation for addressing the technical problem provided by the apparatus is similar to the implementation recorded in the above method, so the specific definition in one or more embodiments of the following apparatus for a robot provided below can refer to the definition of the following method for a robot above, which will not be repeated herein.

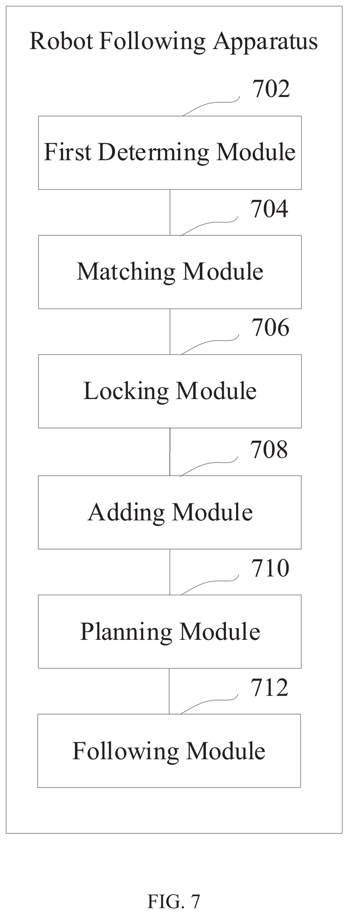

In an embodiment, as shown in FIG. 7, a following apparatus for a robot is provided, including a first determination module 702, a matching module 704, a locking module 706, an adding module 708, a planning module 710, and a following module 712.

The first determination module 702 is configured to determine object information of multiple objects based on a first target image, a first depth map, and first radar information.

The matching module 704 is configured to match the object information and historical object information to obtain a matching result. The historical object information is information corresponding to a historically locked target object.

The locking module 706 is configured to lock the target object again in a case where the matching result indicates that the multiple objects do not include the target object.

The adding module 708 is configured to add the object information of the target object to a target queue to obtain a motion trajectory of the target object in a case where the matching result indicates that the multiple objects include the target object.

The planning module 710 is configured to plan a motion path for the robot according to a current state of the robot and the motion trajectory.

The following module 712 is configured to sample the motion path, determine a motion speed of the robot at each of the trajectory points based on the distances between the respective trajectory points obtained by sampling, and follow the target object according to the motion speed.

In an embodiment, the first determination module 702 is further configured to obtain the first target image, the first depth map, and the first radar information collected during movement; perform object detection on each of the objects in the first target image to obtain first initial object information; perform obstacle detection on the first depth map and the first radar information to obtain first obstacle coordinates corresponding to the first depth map and the first radar information respectively. The first obstacle coordinates are coordinates of the respective obstacles within a visual range of the robot; perform data fusion on the first initial object information and the respective first obstacle coordinates to obtain first fused data; determine object information of the respective objects based on the first fused data.

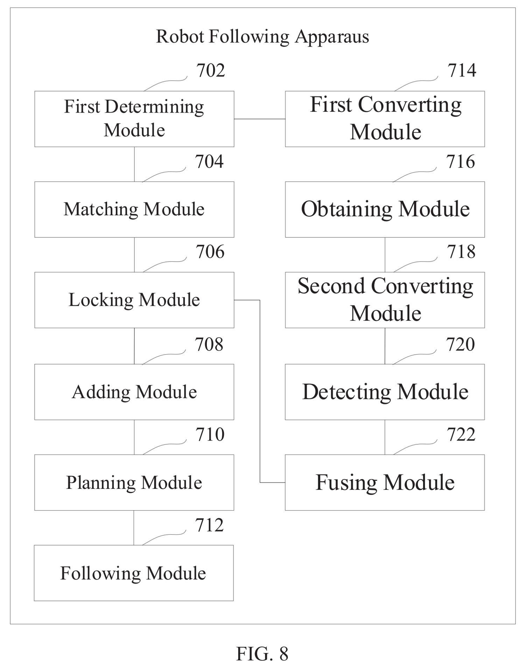

In an embodiment, as shown in FIG. 8, the apparatus further includes:
a first converting module 714, configured to perform coordinate conversion on object coordinates of the respective objects in the first initial object information to obtain first world coordinates of the respective objects in a robot navigation system; perform coordinate conversion on first obstacle coordinates corresponding to the first depth map and the first radar information respectively to obtain second world coordinates and third world coordinates of the respective obstacles in the robot navigation system;
The first determination module 702 is further configured to fuse feature values in the first initial object information, the first world coordinates, the second world coordinates, and the third world coordinates.

In an embodiments, as shown in FIG. 8, the apparatus further includes:
an obtaining module 716, configured to obtain a sound source angle when each of the objects emits a voice, as well as a second target image, a second depth map, and second radar information collected during movement; and the second target image, the second depth map, and the second radar information being collected before collecting the first target image, the first depth map, and the first radar information, respectively;
a second converting module 718, configured to convert the sound source angle into a sound source direction vector in the robot navigation system, and determine seventh world coordinates of the respective objects in the robot navigation system according to the sound source direction vector;
a detecting module 720, configured to perform object detection on the respective objects in the second target image to obtain second initial object information;
the second converting module 718 being further configured to perform coordinate conversion on object coordinates of the respective objects in the second initial object information to obtain fourth world coordinates of the respective objects in the robot navigation system;
the detecting module 720 being further configured to perform obstacle detection on the second depth map and the second radar information to obtain second obstacle coordinates corresponding to the second depth map and the second radar information, respectively;
the second converting module 718 being further configured to perform coordinate conversion on second obstacle coordinates corresponding to the second depth map and the second radar information, respectively, to obtain fifth world coordinates and sixth world coordinates of the respective obstacles in the robot navigation system; where the second obstacle coordinates are coordinates of the respective obstacles within the visual range of the robot;
a fusing module 722, configured to fuse feature values in the second initial object information, the fourth world coordinates, the fifth world coordinates, the sixth world coordinates, and the seventh world coordinates to obtain second fused data;
the locking module 706 being further configured to lock the target object based on the second fused data to obtain historical object information of the target object; where the historical object information including the feature value of the target object and world coordinates in the robot navigation system.

In an embodiment, the first determination module 702 is further configured to input the object information of the target object into a target filter in a case where the matching result indicates that the multiple objects include the target object, enabling the target filter performs position prediction based on the object information to obtain a predicted position of the target object at the next moment; determine a motion direction based on the predicted position and a current position of the target object; the current position is a first world coordinate of the target object in the robot navigation system; determine the current state of the robot according to the motion direction, speed information, and the current position.

In an embodiment, the planning module 710 is further configured to sample the motion trajectory, and fit the sampled trajectory points to obtain a following trajectory; plan the motion path for the robot according to the current state of the robot and the following trajectory.

In an embodiment, the following module 712 is further configured to sample the motion trajectory according to a first sampling frequency to obtain at least two initial sampling points; add adjacent initial sampling points to a sampling queue when a distance between adjacent initial sampling points among the at least two initial sampling points is greater than a first preset distance.

In an embodiment, the following module 712 is further configured to sample a first motion sub-trajectory according to a second sampling frequency to obtain first sampling points when a distance between adjacent initial sampling points among the at least two initial sampling points is less than or equal to the first preset distance; where the second sampling frequency is greater than the first sampling frequency, and the first motion sub-trajectory is a motion trajectory between the adjacent initial sampling points; add the at least two initial sampling points and the first sampling points to the sampling queue when a distance between the first sampling points and the at least two initial sampling points is greater than a second preset distance; add the adjacent initial sampling points to the sampling queue when the distance between the first sampling points and the at least two initial sampling points is less than or equal to the second preset distance, and sample a second motion sub-trajectory according to a third sampling frequency to obtain second sampling points; add the second sampling points to the sampling queue when a distance between the second sampling points and the first sampling points as well as first initial sampling points is greater than a third preset distance; where the third sampling frequency is greater than the second sampling frequency, and the second motion sub-trajectory is a motion trajectory between the first sampling points and the first initial sampling points among the adjacent initial sampling points.

In an embodiment, the locking module 706 is further configured to send out prompt information in the case where the matching result indicates that the multiple objects do not include the target object; where the prompt information is used to prompt a user to issue a following task control instruction, and lock the target object again according to the following task control instruction.

In the above embodiment, object information of multiple objects is determined based on the first target image, the first depth map, and the first radar information; the object information and the historical object information of the historically locked target object are matched to obtain the matching result. The target following using multiple sensors can effectively reduce the probability of losing the followed target due to occlusion in a certain direction. In addition, if the matching result indicates that the multiple objects do not include the target object, the target object is locked again, so that even when the followed target is lost, the following task can be automatically resumed, avoiding the problem that the following task cannot be continued due to occlusion. Moreover, if the matching result indicates that the multiple objects include the target object, the object information of the target object is added to the target queue to obtain the motion trajectory of the target object. The motion path for the robot is planned according to the current state of the robot and the motion trajectory. The motion path is sampled, the motion speeds of the robot at the respective trajectory points are determined based on the distances between the respective trajectory points obtained by sampling, and the robot follows the target object according to the motion speeds, so that the target object can be followed accurately and effectively to perform the following task.

Each of the modules in the above following apparatus for a robot may be fully or partially implemented by software, hardware, or a combination thereof. Each of the above modules may be embedded in or independent of a processor in the robot in the form of hardware, or may be stored in a memory in the robot in the form of software, so that the processor can call and execute operations corresponding to each of the above modules.

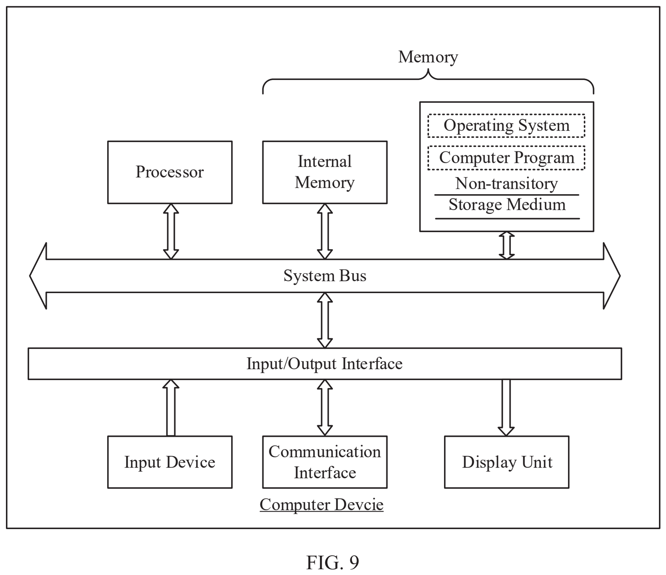

In an embodiment, a robot is provided, and the internal structure thereof is shown in FIG. 9. The robot includes a processor, a memory, an input/output interface, a communication interface, a display unit, and an input device. The processor, the memory, and the input/output interface are connected through a system bus, and the communication interface, the display unit, and the input device are connected to the system bus through the input/output interface. The processor of the robot is configured to provide computing and control capabilities. The memory of the robot includes a non-transitory storage medium and an internal memory. The non-transitory storage medium stores an operating system and a computer program. The internal memory provides an environment for the operation of the operating system and the computer program in the non-transitory storage medium. The input/output interface of the robot is configured to exchange information between the processor and an external device. The communication interface of the robot is configured to communicate with the outside in a wired or wireless manner, and the wireless manner may be implemented through Wi-Fi, a mobile cellular network, NFC, or other technologies. The computer program, when executed by the processor, implements a following method for a robot. The display unit of the robot is configured to form a visible picture, and the display unit may be a display screen, a projection device, or a virtual reality imaging device. The display screen may be a liquid crystal display screen or an electronic ink display screen. The input device of the robot may be a touch layer covered on the display screen, a button, a trackball, a touchpad provided on the robot shell, an external keyboard, a touchpad, or a mouse.

Those skilled in the art should understand that the structure shown in FIG. 9 is only a block diagram of a part of the structure related to the technical solution of the present disclosure, and does not constitute a limitation on the robot to which the technical solution of the present disclosure is applied. A specific robot may include more or fewer components than those shown in the drawings, combine some components, or have different component arrangements.

In an embodiment, a robot is provided, including a memory and a processor. The memory stores a computer program, and the processor implements the following steps when executing the computer program: determining object information of multiple objects based on a first target image, a first depth map, and first radar information; matching the object information and historical object information to obtain a matching result; the historical object information is information corresponding to a historically locked target object; locking the target object again in a case where the matching result indicates that the multiple objects do not include the target object; adding the object information of the target object to a target queue to obtain a motion trajectory of the target object in a case where the matching result indicates that the multiple objects include the target object; planning a motion path for the robot according to a current state of the robot and the motion trajectory; sampling the motion path, determining a motion speed of the robot at each of the trajectory points based on a distance between the respective trajectory points obtained by sampling, and following the target object according to the motion speed.

In an embodiment, when the processor executes the step of determining object information of multiple objects based on the first target image, the first depth map, and the first radar information, this step specifically executes the following steps: obtaining the first target image, first depth map, and first radar information collected during movement; performing object detection on the respective objects in the first target image to obtain first initial object information; performing obstacle detection on the first depth map and the first radar information to obtain first obstacle coordinates corresponding to the first depth map and the first radar information, respectively; the first obstacle coordinates are coordinates of the respective obstacles within a visual range of the robot; performing data fusion on the first initial object information and the respective first obstacle coordinates to obtain first fused data; determining object information of the respective objects based on the first fused data.

In an embodiment, when the processor executes the computer program, the processor further executes the following steps: performing coordinate conversion on object coordinates of the respective objects in the first initial object information to obtain first world coordinates of the respective objects in the robot navigation system; performing coordinate conversion on first obstacle coordinates corresponding to the first depth map and the first radar information, respectively, to obtain second world coordinates and third world coordinates of the respective obstacles in the robot navigation system; fusing feature values in the first initial object information, the first world coordinates, the second world coordinates, and the third world coordinates.

In an embodiment, when the processor executes the computer program, the processor further executes the following steps: obtaining a sound source angle when each of the objects emits a voice, as well as a second target image, a second depth map, and second radar information collected during movement; where the second target image, the second depth map, and the second radar information are collected before collecting the first target image, the first depth map, and the first radar information, respectively; performing object detection on the respective objects in the second target image to obtain second initial object information; performing coordinate conversion on object coordinates of the respective objects in the second initial object information to obtain fourth world coordinates of the respective objects in the robot navigation system; performing obstacle detection on the second depth map and the second radar information to obtain second obstacle coordinates corresponding to the second depth map and the second radar information, respectively; performing coordinate conversion on second obstacle coordinates corresponding to the second depth map and the second radar information, respectively, to obtain fifth world coordinates and sixth world coordinates of the respective obstacles in the robot navigation system; where the second obstacle coordinates are coordinates of the respective obstacles within the visual range of the robot; converting the sound source angle into a sound source direction vector in the robot navigation system, and determining seventh world coordinates of the respective objects in the robot navigation system according to the sound source direction vector; fusing feature values in the second initial object information, the fourth world coordinates, the fifth world coordinates, the sixth world coordinates, and the seventh world coordinates to obtain second fused data; locking the target object based on the second fused data to obtain historical object information of the target object; where the historical object information includes the feature value of the target object and world coordinates in the robot navigation system.

In an embodiment, when the processor executes the computer program, the processor further executes the following steps: inputting the object information of the target object into a target filter in a case where the matching result indicates that the multiple objects include the target object, so that the target filter performs position prediction based on the object information to obtain a predicted position of the target object at the next moment; determining a motion direction based on the predicted position and a current position of the target object; the current position is a first world coordinate of the target object in the robot navigation system; determining the current state of the robot according to the motion direction, the speed information, and the current position.

In an embodiment, when the processor executes the step of planning the motion path for the robot according to the current state of the robot and the motion trajectory, the processor specifically executes the following steps: sampling the motion trajectory, and fitting the sampled trajectory points to obtain a following trajectory; planning the motion path for the robot according to the current state of the robot and the following trajectory.

In an embodiment, when the processor executes the step of sampling the motion trajectory, the processor specifically executes the following steps: sampling the motion trajectory according to a first sampling frequency to obtain at least two initial sampling points; adding adjacent initial sampling points to a sampling queue when a distance between adjacent initial sampling points among the at least two initial sampling points is greater than a first preset distance.

In an embodiment, when the processor executes the step of sampling the motion trajectory, the processor specifically executes the following steps: sampling a first motion sub-trajectory according to a second sampling frequency to obtain first sampling points when a distance between adjacent initial sampling points among the at least two initial sampling points is less than or equal to the first preset distance; where the second sampling frequency is greater than the first sampling frequency, and the first motion sub-trajectory is a motion trajectory between the adjacent initial sampling points; adding the at least two initial sampling points and the first sampling points to the sampling queue when a distance between the first sampling points and the at least two initial sampling points is greater than a second preset distance; adding the adjacent initial sampling points to the sampling queue when the distance between the first sampling points and the at least two initial sampling points is less than or equal to the second preset distance, and sampling a second motion sub-trajectory according to a third sampling frequency to obtain second sampling points; adding the second sampling points to the sampling queue when a distance between the second sampling points and the first sampling points as well as first initial sampling points is greater than a third preset distance; where the third sampling frequency is greater than the second sampling frequency, and the second motion sub-trajectory is a motion trajectory between the first sampling points and the first initial sampling points among the adjacent initial sampling points.

In an embodiment, when the processor executes the step of locking the target object again in a case where the matching result indicates that the multiple objects do not include the target object, the processor specifically executes the following steps: sending out prompt information in the case where the matching result indicates that the multiple objects do not include the target object; where the prompt information is used to prompt a user to issue a voice control instruction for a following task; locking the target object again according to the voice control instruction for the following task.

It should be noted that the user information (including but not limited to user equipment information, user personal information, etc.) and data (including but not limited to data used for analysis, stored data, displayed data, etc.) involved in the present disclosure are all information and data authorized by the user or fully authorized by all parties, and the collection, use, and processing of relevant data need to comply with relevant laws, regulations, and standards of relevant countries and regions.

Those skilled in the art should understand that to realize all or part of the processes of the following method for a robot provided in the above embodiments, the realization can be completed by instructing relevant hardware through a computer program, and the computer program can be stored in a non-transitory computer-readable storage medium. When the computer program is executed, the execution can include the processes of the above following method for a robot provided in the above embodiments. Any reference to a memory, a database, or other medium involved in the embodiments provided in the present disclosure may include at least one of a non-transitory memory or a transitory memory. The non-transitory memory may include a read-only memory (ROM), a magnetic tape, a floppy disk, a flash memory, an optical memory, a high-density embedded non-transitory memory, a resistive random access memory (ReRAM), a magnetoresistive random access memory (MRAM), a ferroelectric random access memory (FRAM), a phase change memory (PCM), a graphene memory, etc. The transitory memory may include a random access memory (RAM) or an external cache memory, etc. For illustration but not limitation, the RAM may be in various forms, such as a static random access memory (SRAM) or a dynamic random access memory (DRAM). The databases involved in the embodiments provided in the present disclosure may include at least one of a relational database or a non-relational database. The non-relational database may include, such as a distributed database based on a blockchain, but is not limited thereto. The processor involved in the embodiments provided in the present disclosure may be a general-purpose processor, a central processing unit, a graphics processor, a digital signal processor, a programmable logic device, a data processing logic device based on quantum computing, etc., but is not limited thereto.

The technical features of the above embodiments can be arbitrarily combined. To make the description concise, not all possible combinations of the technical features in the above embodiments are described. However, as long as there is no contradiction in the combination of these technical features, the combination should be considered in the scope of the specification of the present disclosure.

The above embodiments only show several implementations of the technical solution in the present disclosure, and their descriptions are specific and detailed, but the implementations should not be understood as limiting the scope of the patent application. It should be pointed out that for those skilled in the art, without departing from the inventive concept of the present disclosure, several modifications and improvements may be made, and the modifications and improvements all belong to the protection scope of the present disclosure. Therefore, the protection scope of the present disclosure should be subject to the appended claims.

## Claims

1. A robot, comprising a memory and a processor, the memory storing a computer program, and the processor executing the computer program to execute the following steps:
determining object information of multiple objects based on a first target image, a first depth map, and first radar information;
matching the object information and historical object information to obtain a matching result, wherein the historical object information is information corresponding to a historically locked target object;
locking the target object again in a case where the matching result indicates that the multiple objects do not comprise the target object;
adding the object information of the target object to a target queue to obtain a motion trajectory to the target object in a case where the matching result indicates that the multiple objects comprise the target object;
planning a motion path for the robot according to a current state of the robot and the motion trajectory; and
sampling the motion path, determining a motion speed of the robot at each of the trajectory points based on distances between the trajectory points obtained by sampling, and following the target object according to the motion speed.

2. The robot according to claim 1, wherein when the processor executes the determining the object information of the multiple objects based on the first target image, the first depth map, and the first radar information, the processor specifically executes the following steps:
obtaining the first target image, the first depth map, and the first radar information collected during movement;
performing object detection on the respective objects in the first target image to obtain first initial object information;
performing obstacle detection on the first depth map and the first radar information to obtain first obstacle coordinates corresponding to the first depth map and the first radar information, respectively, wherein the first obstacle coordinates are coordinates of the respective obstacles within the visual range of the robot;
performing data fusion on the first initial object information and the respective first obstacle coordinates to obtain first fused data; and
determining object information of the respective objects based on the first fused data.

3. The robot according to claim 2, wherein when the processor executes the computer program, the processor further executes the following steps:
performing coordinate conversion on object coordinates of the respective objects in the first initial object information to obtain first world coordinates of the respective objects in a robot navigation system; and
performing coordinate conversion on the first obstacle coordinates corresponding to the first depth map and the first radar information, respectively, to obtain second world coordinates and third world coordinates of the respective obstacles in the robot navigation system;
wherein performing the data fusion on the first initial object information and the respective first obstacle coordinates comprises:
fusing feature values in the first initial object information, the first world coordinates, the second world coordinates, and the third world coordinates.

4. The robot according to claim 1, wherein when the processor executes the computer program, the processor further executes the following steps:
obtaining a sound source angle when each of the objects emits a voice, and a second target image, a second depth map, and second radar information collected during movement, wherein the second target image, the second depth map, and the second radar information are collected before collecting the first target image, the first depth map, and the first radar information, respectively;
performing object detection on the respective objects in the second target image to obtain second initial object information; and performing coordinate conversion on object coordinates of the respective objects in the second initial object information to obtain fourth world coordinates of the respective objects in the robot navigation system;
performing obstacle detection on the second depth map and the second radar information to obtain second obstacle coordinates corresponding to the second depth map and the second radar information, respectively; and performing coordinate conversion on the second obstacle coordinates corresponding to the second depth map and the second radar information, respectively, to obtain fifth world coordinates and sixth world coordinates of the respective obstacles in the robot navigation system, wherein the second obstacle coordinates are coordinates of the respective obstacles within the visual range of the robot;
converting the sound source angle into a sound source direction vector in the robot navigation system, and determining seventh world coordinates of the respective objects in the robot navigation system according to the sound source direction vector;
fusing feature values in the second initial object information, the fourth world coordinates, the fifth world coordinates, the sixth world coordinates, and the seventh world coordinates to obtain second fused data; and
locking the target object based on the second fused data to obtain historical object information of the target object, wherein the historical object information comprises a feature value of the target object and a world coordinate in the robot navigation system.

5. The robot according to claim 1, wherein when the processor executes the computer program, the processor further executes the following steps:
inputting the object information of the target object into a target filter in the case where the matching result indicates that the multiple objects comprise the target object, enabling a target filter performs position prediction based on the object information to obtain a predicted position of the target object at a next moment;
determining a motion direction based on the predicted position and a current position of the target object, wherein the current position is a first world coordinate of the target object in a robot navigation system; and
determining the current state of the robot according to the motion direction, speed information, and the current position.

6. The robot according to claim 1, wherein when the processor executes the planning the motion path for the robot according to the current state of the robot and the motion trajectory, the processor specifically executes the following steps:
sampling the motion trajectory, and fitting the trajectory points obtained by sampling to obtain a following trajectory; and
planning the motion path for the robot according to the current state of the robot and the following trajectory.

7. The robot according to claim 6, wherein when the processor executes the sampling the motion path, the processor specifically executes the following steps:
sampling the motion trajectory according to a first sampling frequency to obtain at least two initial sampling points; and
adding adjacent initial sampling points to a sampling queue in a case where a distance between adjacent initial sampling points among the at least two initial sampling points is greater than a first preset distance.

8. The robot according to claim 7, wherein when the processor executes the sampling the motion trajectory, the processor specifically executes the following steps:
sampling a first motion sub-trajectory according to a second sampling frequency to obtain first sampling points in a case where the distance between adjacent initial sampling points among the at least two initial sampling points is less than or equal to the first preset distance, wherein the second sampling frequency is greater than the first sampling frequency, and the first motion sub-trajectory is a motion trajectory between the adjacent initial sampling points; and
adding the at least two initial sampling points and the first sampling points to the sampling queue in the case where distances between the first sampling points and the at least two initial sampling points are greater than a second preset distance;
adding the adjacent initial sampling points to the sampling queue, and sampling a second motion sub-trajectory according to a third sampling frequency to obtain second sampling points in the case where the distances between the first sampling points and the at least two initial sampling points are less than or equal to the second preset distance; adding the second sampling points to the sampling queue in a case where distances between the second sampling points and the first sampling points as well as first initial sampling points are greater than a third preset distance, wherein the third sampling frequency is greater than the second sampling frequency, and the second motion sub-trajectory is a motion trajectory between the first sampling points and the first initial sampling points among the adjacent initial sampling points.

9. The robot according to any one of claims 1 to 8, wherein when the processor executes the the locking the target object in the case where the matching result indicates that the multiple objects do not comprise the target object, the processor specifically executes the following steps:
sending out prompt information in the case where the matching result indicates that the multiple objects do not comprise the target object, wherein the prompt information is used to prompt a user to issue a voice control instruction for a following task; and
locking the target object again according to the voice control instruction for the following task.

10. A robot following method, comprising:
determining object information of multiple objects based on a first target image, a first depth map, and first radar information;
matching the object information and historical object information to obtain a matching result, wherein the historical object information is information corresponding to a historically locked target object;
locking the target object again in a case where the matching result indicates that the multiple objects do not comprise the target object;
adding the object information of the target object to a target queue to obtain a motion trajectory to the target object in a case where the matching result indicates that the multiple objects comprise the target object;
planning a motion path for the robot according to a current state of the robot and the motion trajectory; and
sampling the motion path, determining a motion speed of the robot at each of the trajectory points based on distances between the trajectory points obtained by sampling, and following the target object according to the motion speed.

11. The method according to claim 10, wherein the determining the object information of the multiple objects based on the first target image, the first depth map, and the first radar information comprises:
obtaining the first target image, the first depth map, and the first radar information collected during movement;
performing object detection on the respective objects in the first target image to obtain first initial object information;
performing obstacle detection on the first depth map and the first radar information to obtain first obstacle coordinates corresponding to the first depth map and the first radar information, respectively, wherein the first obstacle coordinates are coordinates of the respective obstacles within the visual range of the robot;
performing data fusion on the first initial object information and the respective first obstacle coordinates to obtain first fused data; and
determining object information of the respective objects based on the first fused data.

12. The method according to claim 11, wherein the method further comprises:
performing coordinate conversion on object coordinates of the respective objects in the first initial object information to obtain first world coordinates of the respective objects in a robot navigation system; and
performing coordinate conversion on the first obstacle coordinates corresponding to the first depth map and the first radar information, respectively, to obtain second world coordinates and third world coordinates of the respective obstacles in the robot navigation system;
wherein performing the data fusion on the first initial object information and the respective first obstacle coordinates comprises:
fusing feature values in the first initial object information, the first world coordinates, the second world coordinates, and the third world coordinates.

13. The method according to claim 10, wherein the method further comprises:
obtaining a sound source angle when each of the objects emits a voice, and a second target image, a second depth map, and second radar information collected during movement, wherein the second target image, the second depth map, and the second radar information are collected before collecting the first target image, the first depth map, and the first radar information, respectively;
performing object detection on the respective objects in the second target image to obtain second initial object information; and performing coordinate conversion on object coordinates of the respective objects in the second initial object information to obtain fourth world coordinates of the respective objects in the robot navigation system;
performing obstacle detection on the second depth map and the second radar information to obtain second obstacle coordinates corresponding to the second depth map and the second radar information, respectively; and performing coordinate conversion on the second obstacle coordinates corresponding to the second depth map and the second radar information, respectively, to obtain fifth world coordinates and sixth world coordinates of the respective obstacles in the robot navigation system, wherein the second obstacle coordinates are coordinates of the respective obstacles within the visual range of the robot;
converting the sound source angle into a sound source direction vector in the robot navigation system, and determining seventh world coordinates of the respective objects in the robot navigation system according to the sound source direction vector;
fusing feature values in the second initial object information, the fourth world coordinates, the fifth world coordinates, the sixth world coordinates, and the seventh world coordinates to obtain second fused data; and
locking the target object based on the second fused data to obtain historical object information of the target object, wherein the historical object information comprises a feature value of the target object and a world coordinate in the robot navigation system.

14. The method according to claim 10, wherein the method further comprises:
inputting the object information of the target object into a target filter in the case where the matching result indicates that the multiple objects comprise the target object, enabling a target filter performs position prediction based on the object information to obtain a predicted position of the target object at a next moment;
determining a motion direction based on the predicted position and a current position of the target object, wherein the current position is a first world coordinate of the target object in a robot navigation system; and
determining the current state of the robot according to the motion direction, speed information, and the current position.

15. The method according to claim 10, wherein the planning the motion path for the robot according to the current state of the robot and the motion trajectory comprises:
sampling the motion trajectory, and fitting the trajectory points obtained by sampling to obtain a following trajectory; and
planning the motion path for the robot according to the current state of the robot and the following trajectory.

16. The method according to claim 15, wherein sampling the motion trajectory comprises:
sampling the motion trajectory according to a first sampling frequency to obtain at least two initial sampling points; and
adding adjacent initial sampling points to a sampling queue in a case where a distance between adjacent initial sampling points among the at least two initial sampling points is greater than a first preset distance.

17. The method according to claim 16, wherein sampling the motion trajectory comprises:
sampling a first motion sub-trajectory according to a second sampling frequency to obtain first sampling points in a case where the distance between adjacent initial sampling points among the at least two initial sampling points is less than or equal to the first preset distance, wherein the second sampling frequency is greater than the first sampling frequency, and the first motion sub-trajectory is a motion trajectory between the adjacent initial sampling points; and
adding the at least two initial sampling points and the first sampling points to the sampling queue in the case where distances between the first sampling points and the at least two initial sampling points are greater than a second preset distance;
adding the adjacent initial sampling points to the sampling queue, and sampling a second motion sub-trajectory according to a third sampling frequency to obtain second sampling points in the case where the distances between the first sampling points and the at least two initial sampling points are less than or equal to the second preset distance; adding the second sampling points to the sampling queue in a case where distances between the second sampling points and the first sampling points as well as first initial sampling points are greater than a third preset distance, wherein the third sampling frequency is greater than the second sampling frequency, and the second motion sub-trajectory is a motion trajectory between the first sampling points and the first initial sampling points among the adjacent initial sampling points.

18. The method according to any one of claims 10 to 17, wherein the locking the target object in the case where the matching result indicates that the multiple objects do not comprise the target object comprises:
sending out prompt information in the case where the matching result indicates that the multiple objects do not comprise the target object, wherein the prompt information is used to prompt a user to issue a voice control instruction for a following task; and
locking the target object again according to the voice control instruction for the following task.

19. A robot following apparatus, comprising:
a first determination module, configured to determine object information of multiple objects based on a first target image, a first depth map, and first radar information;
a matching module, configured to match the object information and historical object information to obtain a matching result, wherein the historical object information is information corresponding to a historically locked target object;
a locking module, configured to lock the target object again in a case where the matching result indicates that the multiple objects do not comprise the target object;
an adding module, configured to add the object information of the target object to a target queue to obtain a motion trajectory to the target object in a case where the matching result indicates that the multiple objects comprise the target object;
a planning module, configured to plan a motion path for the robot according to a current state of the robot and the motion trajectory; and
a following module, configured to sample the motion path, determine a motion speed of the robot at each of the trajectory points based on distances between the trajectory points obtained by sampling, and follow the target object according to the motion speed.

20. A computer-readable storage medium, storing a computer program thereon, wherein the computer program, when executed by a processor, implements the steps of the method according to any one of claims 10 to 18.
